# FASCICULE DE BREVET EUROPEEN

(11) **EP 4 624 700 B1**
(45) Date de publication et mention de la délivrance du brevet: **21.10.2026**
(21) Numéro de dépôt: 25165491.9
(22) Date de dépôt: 21.03.2025
(51) Int. Cl.: E04H 5/06, B25H 5/00, B60P 3/14, B60S 5/00, E04B 1/344, B65D 88/52

(54) **ATELIER DE MAINTENANCE DE VÉHICULES MOBILE**
MOBILE WARTUNGSANLAGE FÜR FAHRZEUGE
MOBILE VEHICLE MAINTENANCE WORKSHOP

(30) Priorité: 25.03.2024 FR 2402888
(43) Date de publication de la demande: 01.10.2025
(73) Titulaire: KNDS France, 78034 Versailles Cedex (FR)
(72) Inventeur: CZORNY, Christophe, 18023 Bourges (FR)
(74) Mandataire: Cabinet Chaillot

(56) Documents cités:
- US-A- 5 833 294
- US-A1- 2022 340 220
- US-B2- 11 135 961

## Description

Le domaine technique de l'invention est celui des interventions en mécanique, telles que d'entretien et de réparation, sur tous véhicules motorisés en tous lieux.

La présente invention concerne un atelier apte à être placé, dans un mode de transport et dans un mode d'utilisation, en particulier un atelier de maintenance de véhicules dont au moins une partie se présente, dans le mode de transport, sous la forme générale d'un conteneur, par exemple aux dimensions d'un conteneur maritime standard ISO, apte à passer d'une configuration repliée pour son transport à une configuration déployée pour son utilisation en tant qu'environnement de maintenance, et inversement.

L'atelier selon la présente invention trouvera tout particulièrement son application, sans s'y limiter, dans le domaine militaire.

Dans le domaine militaire, on connaît de nombreux environnements qui peuvent être transportés dans des conteneurs de dimensions standardisées et qui peuvent être déployés à partir de ces conteneurs. De tels environnements peuvent être utilisés comme abri, comme bureau, comme lieu de vie, comme hôpital de campagne, etc. Dans leur configuration repliée, ces conteneurs peuvent être transportés aisément par tout mode de transport approprié. Quand ils sont placés sur leur lieu d'utilisation, de tels conteneurs peuvent être ouverts et déployés afin de définir un espace plus important que le volume du conteneur lui-même. Pour cela, le conteneur comprend généralement des parois mobiles.

On connaît, par exemple, le brevet européen EP2376351 B1 qui divulgue un abri pliant portable comprenant un conteneur rigide dont au moins l'une des parois latérales est montée pivotante par charnières pour pivoter entre une position verticale fermée et une position horizontale ouverte. Dans ladite position horizontale ouverte, l'au moins une paroi latérale augmente la surface de plancher. En outre, le conteneur comporte des éléments de coin télescopiques supportant le toit et aptes à coulisser entre des positions abaissée et étendue. Dans ladite position étendue, la hauteur du conteneur est augmentée. La ou les parois latérales sont abaissées et relevées par l'intermédiaire d'un treuil manuel ou électrique fixé à une paroi fixe du conteneur, en enroulant ou libérant un câble fixé aux coins de la ou des parois latérales.

Cependant, à l'état déployé, ce conteneur n'offre pas une aire de travail compatible avec la réception d'un véhicule à roues pouvant aller d'une voiture légère à un char lourd. De plus, ce conteneur requiert la mise en place extérieure de moyens dédiés à la maintenance de véhicules, comme par exemple des moyens de levage. Un autre atelier de maintenance de véhicules mobile faisant partie de l'état de la technique est décrit dans US 11 135 961 B2.

Le but de l'invention est donc de proposer un atelier pouvant, dans le mode de transport, être transporté de manière aisée, par exemple comme un conteneur standard, et pouvant, dans le mode d'utilisation, offrir une plateforme de travail compatible avec des gabarits de véhicules à roues pouvant aller d'une voiture légère à un char chenillé, autrement dit, proposant suffisamment de place en hauteur pour l'accès d'un véhicule de type char et suffisamment de surface au sol pour la réception d'un véhicule et la circulation autour de celui-ci, tout en fournissant un sol stable et sain qui évite les enfoncements et le travail à même la terre. Un autre but de l'invention est de proposer un atelier mobile doté de l'ensemble des équipements dédiés à la maintenance de véhicules et nécessaires à cette maintenance. Encore un autre but de l'invention est de proposer un procédé d'installation d'un tel atelier permettant de s'affranchir de la mise en place de moyens de déploiement purement dédiés au déploiement des parois mobiles, et donc d'obtenir de façon aisée et rapide, un tel atelier.

L'invention porte sur un atelier de maintenance de véhicules mobile comprenant un socle-plancher, deux parois latérales et un toit, au moins l'une des parois latérales étant articulée par rapport au socle-plancher suivant leur bord commun pour être mobile entre une position relevée, dans laquelle elle s'étend dans un plan perpendiculaire audit socle-plancher, et une position abaissée, dans laquelle elle s'étend dans le prolongement dudit socle-plancher, dans le plan dudit socle-plancher, de façon à constituer avec le socle-plancher une plateforme, l'atelier étant ainsi apte à être placé dans une configuration fermée, dans laquelle les deux parois latérales s'étendent dans un plan perpendiculaire audit socle-plancher et le toit s'étend dans un plan parallèle audit socle-plancher, et dans une configuration déployée, dans laquelle ladite au moins une paroi latérale est en position abaissée, le toit est articulé par rapport à au moins une paroi latérale mobile suivant leur bord commun pour être mobile entre au moins deux positions, à savoir une position repliée, dans laquelle il s'étend dans un plan parallèle audit socle-plancher dans la position relevée de ladite paroi latérale mobile associée, l'atelier étant alors en configuration fermée, et une position dépliée, dans laquelle le toit forme au moins une rampe d'accès à la plateforme dans la position abaissée de ladite paroi latérale mobile associée, l'atelier étant alors en configuration déployée, l'articulation entre le toit et l'au moins une paroi latérale mobile autorisant un pivotement d'un angle supérieur à 90 degrés entre la position repliée et la position dépliée.

Ainsi, dans la configuration fermée de l'atelier, l'atelier conserve un encombrement réduit et est aisé à déplacer ou transporter. Dans la configuration déployée de l'atelier, la ou les parois mobiles forment une extension du socle-plancher constituant une plateforme plane et le toit est apte à occuper une position inclinée par rapport à cette plateforme plane afin de constituer une rampe d'accès. De ce fait, dans cette configuration déployée, l'atelier procure une surface de travail suffisamment grande pour recevoir un véhicule de type char lourd, donc un véhicule ayant des dimensions importantes en hauteur et en largeur, et intervenir sur celui-ci, sécuritaire pour les opérateurs, et évitant tout travail à même le sol. De plus, un tel atelier peut être rapidement installé et être rapidement converti entre la configuration fermée et la configuration déployée.

De préférence, l'au moins une paroi latérale mobile est articulée par charnière sur le socle-plancher et le toit est articulé par charnière sur la ou les parois latérales mobiles.

De préférence, l'atelier comporte en outre au moins une partie d'extrémité, s'étendant perpendiculairement à partir du socle-plancher, à une extrémité respective de ce dernier, ainsi qu'un unique engin de manutention porté par le socle-plancher et fixé au socle-plancher au voisinage d'une paroi d'extrémité, l'engin de manutention étant contenu à l'intérieur du volume de l'atelier en configuration fermée, l'engin de manutention étant en outre configuré pour être apte à intervenir sur un véhicule reçu sur la plateforme dans la configuration déployée de l'atelier, et l'atelier et l'engin de manutention étant en outre configurés pour permettre à l'engin de manutention d'assurer également la mobilité de l'atelier entre ladite configuration fermée et ladite configuration déployée. Les configurations mentionnées ci-dessus pour l'engin de manutention et l'atelier consistent principalement en leurs dimensionnements et le positionnement de l'engin de manutention sur le socle-plancher, par exemple à proximité d'une paroi d'extrémité.

Ainsi, un seul engin est nécessaire pour assurer à la fois le déplacement des parties mobiles de l'atelier et la manutention associée à la maintenance d'un véhicule. Il en résulte un moindre encombrement de la surface de travail en configuration déployée, un gain de place en configuration fermée et un gain financier. En particulier, un tel engin évite la disposition de plusieurs dispositifs d'assistance ou d'équilibrage de force pour l'articulation des parois et du toit.

De préférence, l'engin de manutention est une grue repliable, un espace latéral étant formé entre une paroi latérale mobile et la paroi d'extrémité située au voisinage de la grue dans la configuration fermée de l'atelier et un espace supérieur étant formé entre le toit et la paroi d'extrémité située au voisinage de la grue dans la configuration fermée de l'atelier, lesdits espaces latéral et supérieur permettant le déploiement de la grue dans la configuration fermée de l'atelier.

Avantageusement, afin d'assurer la sécurité des opérateurs et du matériel, la grue est une grue repliable à repliage et déploiement automatiques.

De préférence, la grue comprend un mât repliable et une flèche télescopique.

Avantageusement, le mât repliable comporte un pied de mât articulé autour d'un axe horizontal sur un châssis tournant porté par un pivot vertical solidaire du socle-plancher et une tête de mât articulée autour d'un axe horizontal à l'extrémité du pied de mât, et la flèche télescopique comporte un pied de flèche articulé autour d'un axe horizontal à l'extrémité de la tête de mât et une pointe de flèche montée coulissante dans le pied de flèche, un premier vérin étant articulé entre le pied de mât et la tête de mât et un second vérin étant articulé entre la tête de mât et le pied de flèche.

Avantageusement, un organe de levage adapté pour recevoir une élingue de la grue, tel que des anneaux de levage, est prévu à un ou à chaque bord non articulé d'une partie articulée du conteneur.

De préférence, des panneaux complémentaires amovibles ou repliables remplissent l'espace latéral et l'espace supérieur dans la configuration déployée de l'atelier, de telle sorte que les bords perpendiculaires aux bords articulés sont des bords droits. La surface de travail ainsi obtenue ne présente pas de risque pour la sécurité des opérateurs. On souligne ici que ledit espace latéral et ledit espace supérieur seront limités au strict nécessaire pour le déploiement de l'engin de manutention et d'éventuels stabilisateurs.

Dans un mode de réalisation particulier, l'atelier comporte deux parois d'extrémité montées fixes par rapport au socle-plancher, deux parois latérales mobiles articulées aux grands côtés du socle-plancher et aptes chacune à adopter ladite position relevée ou ladite position abaissée, le toit étant défini par deux panneaux de toit, chaque panneau de toit étant articulé au grand côté opposé au grand côté articulé au socle-plancher de l'une des parois latérales mobiles et étant apte à adopter ladite position repliée ou ladite position dépliée.

Une telle configuration permet d'obtenir une plateforme, constituée par le socle-plancher et les deux parois latérales en position abaissée, suffisamment grande pour recevoir un véhicule de grandes dimensions, et deux rampes d'accès à la plateforme, constituées par les deux panneaux de toit en position dépliée, permettant l'entrée d'un véhicule par l'une des rampes et la sortie du véhicule par l'autre rampe.

Dans une variante, l'atelier pourrait comporter une seule paroi latérale mobile et un seul panneau de toit. Dans une autre variante, l'atelier pourrait comporter deux parois latérales mobiles et un seul panneau de toit.

Avantageusement, les deux panneaux de toit sont configurés de telle sorte que dans la configuration fermée de l'atelier, une zone de recouvrement est formée entre les deux panneaux de toit.

Avantageusement, pour le ou chaque panneau de toit, la face dirigée à l'opposé du sol dans la configuration déployée de l'atelier est inclinée vers le sol. Ainsi, dans la position dépliée, le ou chaque panneau de toit est destiné à former une rampe d'accès inclinée entre le sol et la plateforme.

De préférence, dans la position abaissée, la ou les parois latérales mobiles sont portées par des moyens de mise à niveau agencés entre la ou chaque paroi latérale mobile et le sol afin d'assurer le maintien en porte-à-faux de la ou des parois latérales abaissées à la même hauteur que le socle-plancher. De tels moyens de mise à niveau permettent d'obtenir une plateforme stable.

Avantageusement, les moyens de mise à niveau sont disposés dans la région des deux bords articulés de la ou des parois mobiles, à savoir le bord articulé au socle-plancher et le bord articulé au toit.

Les moyens de mise à niveau peuvent comporter des plaques d'appui rapportées, la mise à niveau étant obtenue par empilement de plaques d'appui.

En variante, les moyens de mise à niveau peuvent comporter des plaques d'appui rapportées solidaires de vérins télescopiques, notamment de vérins à vis. Dans une autre variante, les moyens de mise à niveau peuvent comporter des vérins télescopiques, notamment des vérins à vis, portés par la ou chaque paroi latérale mobile et logés dans l'épaisseur du panneau définissant ladite paroi, chaque vérin pouvant porter un pied escamotable destiné à venir en contact avec le sol. Dans ces variantes, la mise à niveau est obtenue par réglage des vérins télescopiques.

Dans encore une autre variante, les moyens de mise à niveau peuvent comporter des vérins hydrauliques logés dans l'épaisseur du panneau définissant la ou chaque paroi latérale mobile. Dans cette variante, la mise à niveau peut être obtenue de manière automatique, avec éventuellement un nivellement réalisé par un opérateur et des moyens extérieurs, comme par exemple un niveau à bulle.

On souligne également qu'il sera avantageusement possible de procéder à une mise à niveau manuelle des rampes d'accès, par exemple à l'aide de cales, notamment afin d'étendre, au besoin, la zone horizontale.

De préférence, l'atelier renferme, dans la configuration fermée, au moins un équipement dédié à la maintenance de véhicules, lequel équipement est porté par le socle-plancher dans la configuration fermée de l'atelier. La présence d'un équipement embarqué permet de transporter à la fois la structure et le matériel nécessaire à la maintenance de véhicules.

Avantageusement, dans la configuration déployée de l'atelier, la plateforme et la ou les rampes d'accès présentent deux bandes de circulation renforcées permettant la circulation de véhicules lourds, notamment jusqu'à 50 tonnes.

De préférence, pour une utilisation optimale de l'atelier et un respect de la réglementation sur l'élimination des déchets, l'atelier comporte un moyen de stockage de fluides usagés logé dans l'épaisseur d'un panneau définissant une paroi latérale mobile.

De préférence, l'atelier comporte un moyen d'alimentation en énergie, en particulier pour l'engin de manutention, logé au moins en partie dans l'épaisseur d'un panneau définissant une paroi d'extrémité.

Le moyen de stockage de fluides usagés peut comporter au moins un réservoir.

Le moyen d'alimentation en énergie peut comporter au moins une batterie ainsi que l'électronique nécessaire au fonctionnement de l'atelier.

De préférence, l'atelier, dans la configuration fermée, se présente sous la forme générale d'un conteneur transport à la norme ISO, comme par exemple un conteneur maritime de vingt pieds de longueur, High Cube ou standard, notamment de norme ISO668 1CCC ou 1CC, le socle-plancher présentant à ses quatre angles des pièces de coin. L'atelier pourra ainsi être transporté, dans la configuration fermée, comme un conteneur classique
L'atelier pourra alors avantageusement comprendre une berce, laquelle comprend notamment deux rails solidaires d'une face inférieure du socle-plancher et faisant saillie de ce dernier à une première extrémité des rails, une potence à deux bras s'étendant à partir desdites premières extrémités des rails, un crochet de préhension solidaire de la potence, et deux rouleaux de dépose, chacun situé au voisinage d'une seconde extrémité d'un rail respectif. La berce pourra être avantageusement conforme à la norme STANAG 2413.

Il serait en variante possible de prévoir que l'atelier soit simplement équipé, par exemple sur la face extérieure d'une paroi d'extrémité, d'un axe de préhension du type de celui de la berce pour permettre une manutention de l'atelier, dans la configuration fermée, avec les mêmes moyens que ceux déjà couramment utilisés pour les conteneurs classiques.

Selon un autre mode de réalisation, l'atelier comprend un châssis roulant dont une partie principale est abaissée par rapport à deux parties d'extrémité portant des moyens pour roulage, le socle-plancher étant fixé sur ladite partie principale.

Le châssis roulant pourrait être du type de celui d'une remorque roulante, les moyens de roulage pouvant être formés, une première partie d'extrémité, par au moins un essieu et, à la seconde partie d'extrémité, par un col de cygne pour attelage à un véhicule motorisé. En d'autres termes, la présente invention pourrait alors être considérée comme étant une remorque roulante équipée d'un atelier de maintenance de véhicules.

En variante, le châssis roulant pourrait être du type de celui d'un véhicule motorisé, comprenant ainsi notamment les moyens moteurs, la cabine, etc. En d'autres termes, la présente invention pourrait alors être considérée comme étant un véhicule motorisé, par exemple un camion, équipé d'un atelier de maintenance de véhicules.

Dans les deux cas ci-dessus, l'atelier, dans sa configuration fermée, pourra alors être transporté de manière aisée par un véhicule motorisé. On souligne ici que la présence de parois d'extrémité y est également facultative.

L'invention sera mieux comprise à la lecture de la description suivante, description faite au regard des dessins en annexe, dessins dans lesquels :
[Fig. 1] représente une vue en perspective schématique de l'atelier de maintenance selon un premier mode de réalisation particulier de l'invention, dans la configuration fermée ;
[Fig. 2] représente une vue de côté longitudinale schématique de l'atelier de la Figure 1, dans la configuration fermée ;
[Fig. 3] représente une vue de côté transversale, ou vue de face, schématique de l'atelier de la Figure 1, dans la configuration fermée, les parois d'extrémité et la berce étant omises ;
[Fig. 4] illustre une vue de côté transversale schématique de l'atelier de la Figure 3, lors d'une étape d'installation, après déploiement de la grue ;
[Fig. 5] correspond à une étape ultérieure à celle de la Figure 4 ;
[Fig. 6] montre l'atelier de la Figure 3 dans la configuration déployée ;
[Fig. 7] est une vue schématique de dessus de l'atelier de la Figure 1, dans la configuration déployée et en utilisation ; [Fig. 8] est une vue en perspective de l'atelier de la Figure 1, dans la configuration déployée, montrant la plateforme et les rampes d'accès ;
[Fig. 9] est une vue de côté schématique de l'atelier de maintenance selon un second mode de réalisation de l'invention, en cours d'extension du châssis roulant ; et [Fig. 10] est une vue de dessus schématique de l'atelier de la Figure 9, dans la configuration déployée.

L'atelier 1 mobile de maintenance de véhicules V selon l'invention est destiné à être transporté en un lieu souhaité, notamment à proximité de zones d'opérations, et à être déployé rapidement afin d'accueillir tout type de véhicule V, à savoir aussi bien une voiture légère qu'un char chenillé, pour permettre la réalisation d'opérations de maintenance.

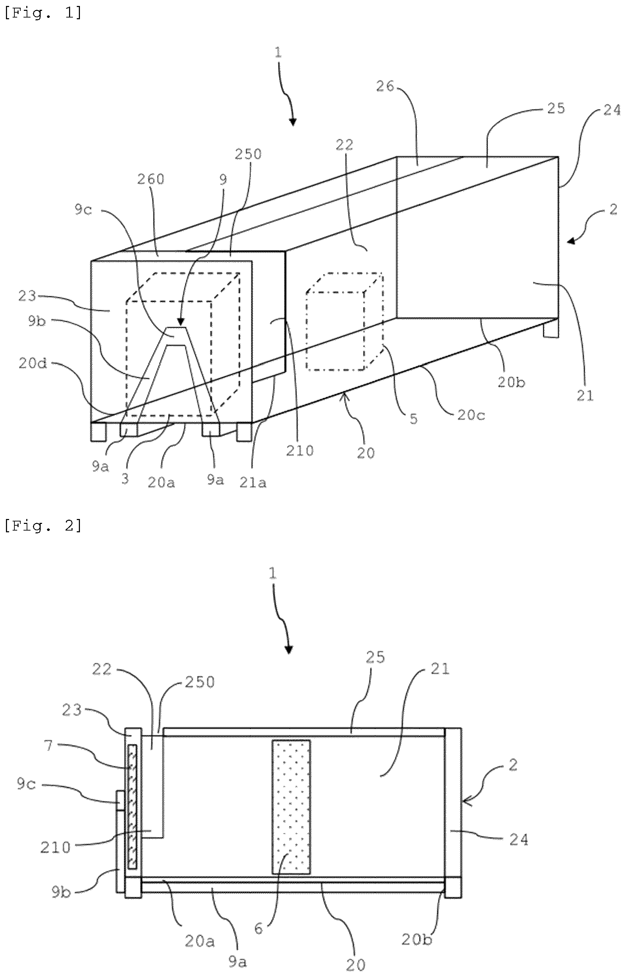

Dans le premier mode de réalisation représenté sur les Figures 1 à 8, l'atelier 1 se présente, dans une configuration fermée, sous la forme générale d'un conteneur 2 transportable, et comprend un unique engin de manutention 3, des moyens de mise à niveau 4, au moins un équipement 5 dédié à la maintenance de véhicules V, un moyen de stockage de fluides usagés 6 et un moyen d'alimentation en énergie 7.

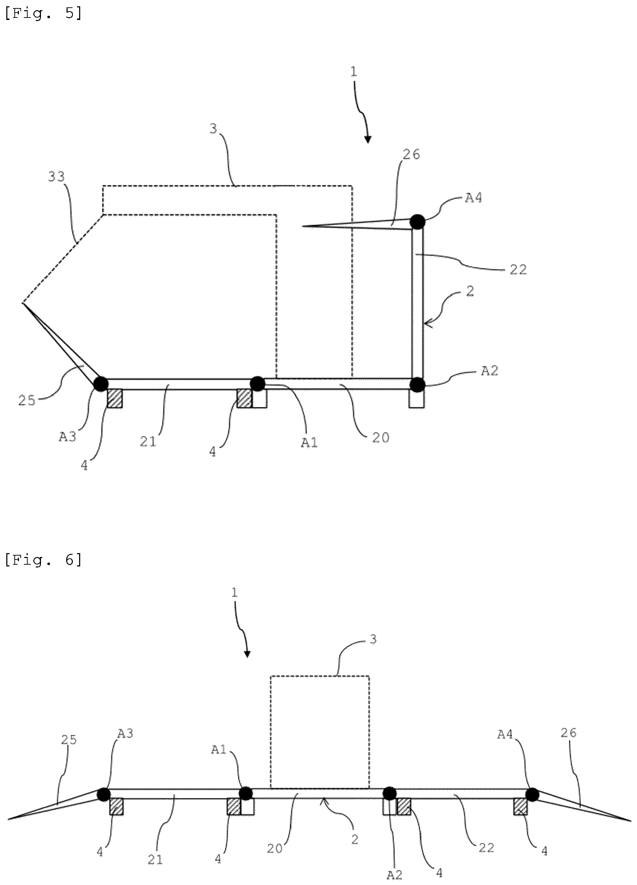

Si l'on se réfère aux Figures 1 à 3, on peut voir que l'atelier 1 se présente, dans une configuration fermée, sous la forme générale d'un conteneur 2 creux et rigide de forme parallélépipédique. Si l'on se réfère aux Figures 6 à 8, on peut voir que, dans un état prêt à l'utilisation de l'atelier 1, l'atelier 1 est dans une configuration déployée. L'atelier 1 est donc apte à passer de la configuration fermée à la configuration déployée, et inversement.

L'atelier 1 présente, en configuration fermée, des dimensions standards, à savoir des dimensions répondant aux normes internationales ISO de transport et de manutention des conteneurs, ou des dimensions approchant celles d'un conteneur de dimensions standards. L'atelier 1 comprend un socle-plancher 20, deux parois latérales 21, 22, deux parois d'extrémité 23, 24 et un toit 25, 26. Plus particulièrement, dans le mode de réalisation préféré représenté, l'atelier 1 comprend un socle-plancher 20, deux paroi latérales 21, 22 pivotantes, deux parois d'extrémité 23, 24 fixes par rapport au socle-plancher 20 et un toit 25, 26 en deux parties pivotantes. En variante, l'atelier 1 pourrait comprendre une seule paroi latérale pivotante et/ou un toit en une seule partie pivotante.

Le socle-plancher 20 comporte un panneau de forme rectangulaire ayant une extrémité longitudinale avant 20a, une extrémité longitudinale arrière 20b, un bord gauche 20c et un bord droit 20d. Les bords gauche 20c et droit 20d correspondent aux grands côtés du panneau, les extrémités longitudinales avant 20a et arrière 20b correspondent aux petits côtés du panneau. Le panneau présente une face interne et une face externe opposée.

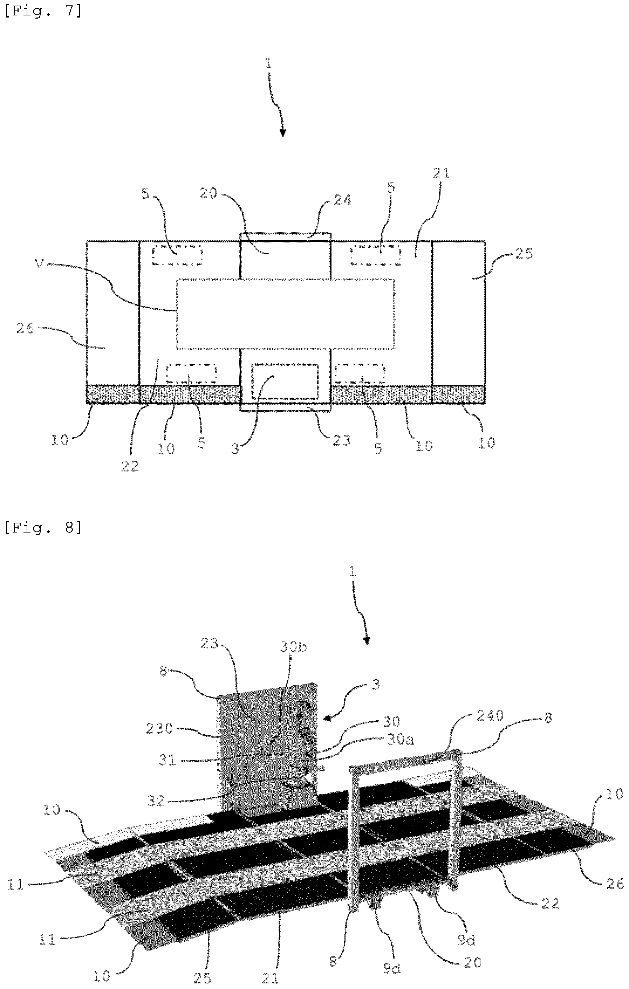

Chaque paroi d'extrémité 23, 24 comporte un panneau de forme rectangulaire solidaire d'un cadre de renfort 230, 240, les cadres de renfort 230, 240 étant visibles sur la Figure **8****.** L'une des parois d'extrémité 23 dite paroi avant 23 est solidaire de l'extrémité longitudinale avant 20a, tandis que l'autre paroi d'extrémité 24 dite paroi arrière 24 est solidaire de l'extrémité longitudinale arrière 20b. Les parois avant 23 et arrière 24 sont disposées en regard l'une de l'autre. Chaque cadre 230, 240 présente deux montants verticaux reliés à leur extrémité supérieure par une traverse supérieure. Chaque paroi d'extrémité 23, 24 présente à ses quatre coins, donc aux extrémités supérieure et inférieure des montants, un élément de coin 8 standard et présentant des ouvertures normalisées sur toutes leurs faces apparentes, notamment pour la préhension par des engins de manutention. Ces éléments de coin 8, visibles sur la Figure 8, sont des éléments connus en soi.

De préférence, l'atelier 1 est également équipé d'une berce 9 pour faciliter sa manutention. La berce 9 comprend deux rails 9a longitudinaux, parallèles à la direction longitudinale du socle-plancher 2 et solidaires de la face inférieure de ce dernier. Les rails 9a font saillie du socle-plancher 2 à une première extrémité, à partir de laquelle s'étend une potence 9b à deux bras, qui se situe au voisinage d'une face externe de la paroi d'extrémité 23, et qui porte à sa partie supérieure un crochet de préhension 9c de préférence conforme à la norme STANAG 2413. La berce 9 comprend également deux rouleaux de dépose 9d (Figure 8), chacun situé au voisinage d'une seconde extrémité d'un rail 9a respectif, les rouleaux de dépose 9d étant ici porté à rotation directement par le socle-plancher 2. La berce 9 permet de poser l'atelier 1, dans la configuration fermée, sur un moyen de transport (non représenté), tel qu'un camion porte-conteneur, puis à le déposer sur le sol en vue de son utilisation.

Bien entendu, ce crochet de préhension 9c peut être remplacé par tout autre moyen d'ancrage et/ou de levage approprié, comme par exemple conforme aux normes NF R17-107 et NF R17-108 pour les applications civiles.

Dans le cas d'une motorisation électrique de l'engin de manutention 3, le moyen d'alimentation en énergie 7 peut être logé dans l'épaisseur du panneau de la paroi avant 23, comme représenté sur la Figure 2. Ce moyen peut comprendre des batteries et l'électronique nécessaire au fonctionnement de l'engin de manutention **3.**

Chaque paroi latérale 21, 22 comporte un panneau qui est relié à un bord 20c, 20d du socle-plancher 20 et est monté mobile en pivotement autour d'un axe d'articulation A1, A2 parallèle au bord commun entre la paroi 21, 22 et le socle-plancher 20. Ce panneau a deux grands côtés opposés et deux petits côtés opposés. La longueur du grand côté correspondant au bord relié au socle-plancher 20 a la même longueur que chacun des bords gauche 20c et droit 20d auquel il est relié. L'un des deux panneaux, autrement dit le panneau de l'une des deux parois latérales 21, 22, par exemple, de la paroi 21 reliée au bord gauche 20c du socle-plancher 20, présente un bord opposé au bord relié au socle-plancher 20 de longueur inférieure à celle du bord relié au socle-plancher 20 et un bord correspondant à l'un de ses petits côtés en forme de gradin, de sorte qu'une zone évidée 21a rectangulaire est formée dans une région de coin de ce panneau. Dans la position relevée de la paroi latérale 21, cette zone évidée 21a crée un espace latéral 210 vertical entre la paroi d'extrémité 23 adjacente à cette zone évidée 21a et ledit panneau de paroi latérale **21.** L'autre panneau a deux petits côtés de même longueur sensiblement égale à la longueur de chaque montant vertical et deux grands côtés de même longueur.

Le grand côté, côté bord inférieur, de chaque panneau est couplé à pivotement au socle-plancher 20 par une articulation A1, A2 prévue entre chaque paroi latérale 21, 22 et le socle-plancher 20 afin de passer d'une position relevée et verticale, perpendiculaire au socle-plancher 20, à une position abaissée et horizontale, coplanaire au socle-plancher 20. Ainsi, les deux articulations A1, A2 autorisent chacune une rotation de l'ordre de quatre-vingt-dix degrés. Autrement dit, chaque articulation A1, A2 est telle qu'après un pivotement de 90 degrés du panneau vers l'extérieur, sa face interne est de niveau avec la face interne du socle-plancher 20. Chaque articulation A1, A2 est, de préférence, une articulation par charnières. Il convient de souligner que les parois latérales 21, 22 mobiles sont reliées au socle-plancher 20 uniquement par ces articulations A1, A2, aucun moyen de déplacement des parois mobiles 21, 22 ne reliant les parois mobiles 21, 22 au socle-plancher 20.

De façon avantageuse, en vue d'assurer une élimination des déchets, le moyen de stockage de fluides usagés 6 est logé dans l'épaisseur du panneau de l'une des deux parois latérales 21, 22, notamment la paroi 21 reliée au bord gauche 20c du socle-plancher 20 et présentant la zone évidée 21a, comme représenté sur la Figure 2. Ce moyen 6 peut comprendre un ou plusieurs réservoirs de stockage. Ces réservoirs peuvent être placés de manière centrée par rapport au panneau en considérant la direction longitudinale du panneau. Un accès à ce ou ces réservoirs peut être ménagé sur la face interne du panneau, qui fera donc partie de la surface de la plateforme de travail en configuration déployée, la vidange s'effectuant par un bouchon localisé en partie basse du réservoir lorsque l'atelier 1 est en configuration déployée. Avantageusement, le bouchon est accessible lorsque l'atelier 1, en configuration fermée, se situe sur un véhicule porteur.

La Figure 5 montre la paroi latérale 21 présentant la zone évidée 21a placée en position abaissée. Dans cette position abaissée, elle repose sur des moyens de mise à niveau 4. Ces moyens 4 sont positionnés ou déplacés dans l'espace formé entre le sol et la paroi latérale 21 lorsque la face interne du panneau est située dans le même plan que la face interne du socle-plancher 20. Ainsi, ces moyens 4 assurent la formation d'une plateforme plane et donc stable, laquelle plateforme est formée par la face interne du socle-plancher 20 et la face interne de chaque paroi latérale 21, 22 en position abaissée. De la même manière, comme on peut le voir sur la Figure 6, une fois l'autre paroi latérale 22 placée dans la position abaissée, elle repose elle aussi sur les moyens de mise à niveau **4.** De préférence, chaque paroi latérale 21, 22 est mise à niveau par quatre moyens de mise à niveau 4 agencés au niveau de ses quatre coins. Chaque moyen de mise à niveau 4 peut être au moins un élément rapporté et/ou un élément intégré au panneau. Dans le cas d'un élément rapporté, il peut s'agir de plusieurs plaques d'appui empilées les unes sur les autres et/ou d'une plaque d'appui portant un vérin à vis. Le nombre de plaques d'appui à empiler et/ou le réglage du vérin à vis est alors estimé par l'opérateur à l'aide d'un outil externe, tel qu'une pige ou un niveau laser. Dans le cas d'un élément intégré au panneau, il peut s'agir d'un vérin à vis logé dans l'épaisseur du panneau ou d'un vérin hydraulique logé dans l'épaisseur du panneau. Dans le cas de vérins hydrauliques, la course des vérins est réglée automatiquement par l'intermédiaire d'un système intégré dans le conteneur **2.**

Le toit 25, 26 est défini par des premier 25 et second 26 panneaux de toit rectangulaires. Chaque panneau de toit 25, 26 est articulé à l'une des parois latérales 21, 22 et est monté mobile en pivotement autour d'un axe d'articulation A3, A4 parallèle au bord commun entre la paroi latérale 21, 22 et le panneau de toit 25, 26. Ainsi, chaque panneau de toit 25, 26 a un bord articulé, un bord libre opposé au bord articulé, et deux bords latéraux. En coupe transversale, chaque panneau de toit 25, 26 présente ici une section triangulaire, notamment triangulaire rectangle. L'angle droit de ce triangle rectangle est formé entre le bord articulé et la face tournée vers l'extérieur en position repliée. L'hypoténuse de ce triangle rectangle est formée par la face dirigée vers l'intérieur du conteneur 2 en position repliée. La longueur du bord articulé est égale à la longueur du bord libre, laquelle longueur correspond à la longueur du bord longitudinal relié au panneau de toit 25 de la paroi latérale 21 comportant la zone évidée. Ainsi, dans la configuration fermée du conteneur 2, un espace supérieur 250, 260 est formé entre le toit 25, 26 et la paroi d'extrémité avant 23, sur toute la largeur de la paroi d'extrémité 23.

En configuration fermée, l'espace supérieur 250, 260 horizontal et l'espace latéral 210 vertical délimitent ensemble un espace suffisant pour permettre le déploiement de l'engin de manutention 3.

Chaque bord latéral a une longueur supérieure à la moitié de la largeur de chaque paroi d'extrémité 23, 24. Ainsi, dans la configuration fermée, l'un des panneaux de toit, notamment le premier panneau 25, recouvre la région de bord libre de l'autre panneau de toit, notamment le second panneau de toit 26. Cette zone de recouvrement permet d'assurer l'étanchéité en configuration fermée.

L'articulation A3, A4 entre chaque panneau de toit 25, 26 et la paroi latérale 21, 22 correspondante peut être une articulation de type à charnières. Cette articulation A3, A4 autorise une rotation d'un angle supérieur à 90 degrés autour de l'axe d'articulation A3, A4, lequel axe A3, A4 est parallèle à l'axe d'articulation A1, A2 entre le socle-plancher 20 et chaque paroi latérale 21, 22. Autrement dit, une rotation supérieure à 90 degrés entre le panneau de toit 25, 26 et la paroi latérale 21, 22 associée est possible.

Ainsi, chaque panneau de toit 25, 26 est apte à occuper une position repliée, dans laquelle il s'étend sensiblement perpendiculairement à la paroi latérale 21, 22, donc sensiblement horizontalement lorsque la paroi latérale 21, 22 est en position relevée, et une position dépliée, dans laquelle il s'étend à un angle supérieur à 180 degrés par rapport à la paroi latérale 21, 22 en position abaissée, et de manière inclinée entre la plateforme et le sol. Dans cette position dépliée, chaque panneau de toit 25, 26 constitue une rampe d'accès à la plateforme, permettant de faciliter l'accès, à savoir l'entrée et la sortie, des véhicules V, comme on peut le voir sur la Figure **8****.** On pourra également procéder, au besoin, à une mise à niveau manuelle des rampes d'accès, par exemple à l'aide de cales.

Les Figures 7 et 8 montrent les deux parois latérales 21, 22 placées en position abaissée et les deux panneaux de toit 25, 26 placés en position dépliée. Ces positions définissent la configuration déployée de l'atelier 1, dans laquelle des panneaux complémentaires 10 amovibles sont ajoutés pour obtenir une zone de travail rectangulaire, autrement dit une plateforme 20, 21, 22 et des rampes 25, 26 de même longueur dans la direction longitudinale du socle-plancher 20. En particulier, un panneau complémentaire 10 comble la zone évidée 21a et deux panneaux complémentaires 10 prolongent chacun des deux panneaux de toit 25, 26, de telle sorte que le bord de la plateforme et des rampes côté paroi avant 23 est un bord droit. La face dirigée vers le haut de chaque panneau complémentaire 10 est à fleur avec la face dirigée vers le haut du panneau auquel il est relié. En variante, un ou chacun des panneaux complémentaires 10 pourrait être un panneau repliable, monté pivotant par rapport au bord du panneau auquel il est relié, et apte à être replié contre le panneau qui le porte. Comme on peut le voir sur la Figure 8, d'autres panneaux complémentaires 10 peuvent être installés au niveau du bord opposé au bord articulé de chaque panneau de toit 25, 26. Un tel prolongement des rampes pourrait permettre de diminuer l'inclinaison des rampes et donc de faciliter l'avantage l'accès des véhicules V à la plateforme. Les panneaux complémentaires 10 peuvent être fixés aux parois latérales 21, 22 et aux panneaux de toit 25, 26 par exemple par des vis et taraudages ménagés dans les panneaux de toit 25, 26 ou bien encore sanglés sur le socle-plancher 20.

Comme on peut le voir sur les Figures, l'atelier 1 comporte un unique engin de manutention 3, tel qu'une grue 3 repliable, à la fois pour la mobilité des panneaux mobiles 21, 22, 25, 26 et pour l'entretien et/ou la réparation des véhicules V. Cette grue 3 est portée par le socle-plancher 20 et solidaire de la face interne de celui-ci, au voisinage de l'extrémité longitudinale avant 20a. La grue 3 est installée à demeure sur le socle-plancher 20. Dans la configuration fermée, la grue 3 se situe en regard de l'espace latéral 210 et de l'espace supérieur 250, 260.

Pour plus de sécurité, il peut s'agir d'une grue 3 à repliage et déploiement automatiques. Dans ce cas, comme cela est visible sur la Figure 8, la grue 3 comprend un mât 30 repliable et une flèche 31 télescopique. Le mât 30 repliable comporte un pied de mât 30a articulé autour d'un axe horizontal sur un châssis tournant 32 porté par un pivot vertical solidaire du socle-plancher 20 et une tête de mât 30b articulée autour d'un axe horizontal à l'extrémité du pied de mât 30a, et la flèche 31 télescopique comporte un pied de flèche articulé autour d'un axe horizontal à l'extrémité de la tête de mât 30b et une pointe de flèche montée coulissante dans le pied de flèche, un premier vérin étant articulé entre le pied de mât 30a et la tête de mât 30b et un second vérin étant articulé entre la tête de mât 30b et le pied de flèche. Pour la mobilité des panneaux, la grue 3 comporte des élingues 33 reliées à la pointe de flèche. Chaque élingue 33 est apte à être reliée à un organe de levage, par exemple des anneaux de levage, prévu à un ou à chaque bord libre d'un panneau mobile.

Chaque panneau est suffisamment rigide pour porter le ou les équipements 5 dédiés à la maintenance de véhicules V et marcher dessus. Comme on peut le voir sur la Figure 1, ces équipements 5 sont portés par le socle-plancher 20 dans la configuration fermée. Comme on peut le voir sur la Figure 7, dans la configuration déployée, ces équipements 5 sont placés à des emplacements souhaités sur la plateforme et les rampes. Ainsi, l'atelier 1 selon la présente invention contient l'ensemble des moyens nécessaires à la maintenance de tous types de véhicules V motorisés.

Dans la configuration déployée de l'atelier 1, la face de la plateforme et des rampes d'accès destinée à venir en contact avec les véhicules V présente deux bandes de circulation renforcées 11 permettant la circulation de véhicules lourds, notamment jusqu'à 50 tonnes. Comme on peut le voir sur la Figure 8, ces bandes 11 sont parallèles entre elles et espacées l'une de l'autre d'une distance correspondant à l'écartement entre les moyens de roulement d'un véhicule lourd. Chaque bande 11 est continue du bord libre d'une rampe au bord libre de la rampe opposée, dans une direction orthogonale aux axes d'articulation A1-A4. La surface ne comportant pas les deux bandes renforcées 11 est conçue pour permettre la circulation d'un transpalette d'une capacité suffisante à la manutention des équipements nécessaires à la réparation des véhicules lourds.

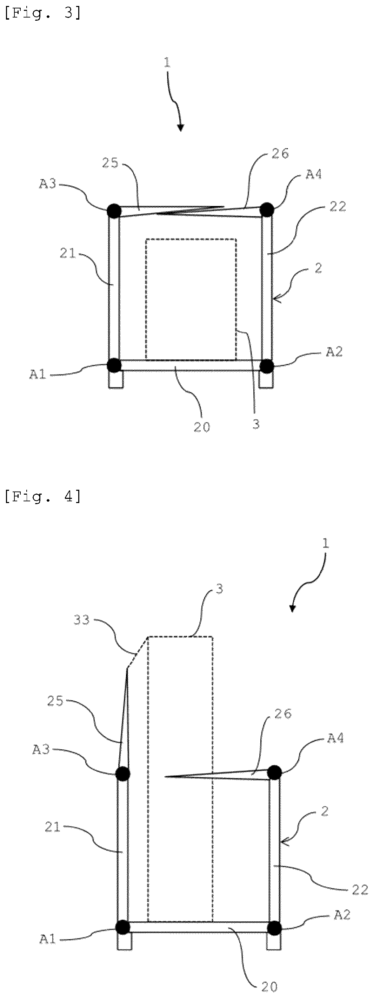

La mise en œuvre de l'atelier 1, pour passer de la configuration fermée (Figures 1-3) à la configuration déployée (Figures 6-8), est simple et rapide. Tout d'abord, la grue 3 est déployée, éventuellement de manière automatique. A l'issue de ce déploiement, la tête de mât 30b et la flèche 31 sont placés au-dessus du toit 25, 26 après passage à travers l'espace latéral 210 et l'espace supérieur 250, 260. Il convient ensuite de procéder à l'élingage du toit 25, 26. Pour cela, les élingues 33 sont reliées au niveau des deux coins du bord libre du premier panneau de toit 25. L'opérateur actionne alors le levage du premier panneau de toit 25, comme représenté sur la Figure 4. Ce premier panneau de toit 25 et la première paroi latérale 21 associée sont déplacés, par des mouvements de rotation de la grue 3, ainsi que par la commande de ses vérins, jusqu'à ce que la première paroi latérale 21 soit déposée au sol, comme représenté sur la Figure 5. Les moyens de mise à niveau 4 sont alors installés et/ou réglés entre la première paroi latérale 21 en position abaissée et le sol, afin d'obtenir la stabilité souhaitée. Puis, le premier panneau de toit 25 est à son tour déposé sur le sol afin de constituer une première rampe d'accès. Ces étapes sont alors répétées pour le second panneau de toit 26 et la seconde paroi latérale 22 associée. Une fois les parois latérales 21, 22 en position abaissée et calées par les moyens de mise à niveau 4 et les panneaux de toit 25, 26 en position dépliée, les panneaux complémentaires 10 et les équipements 5 de maintenance sont installés. L'atelier 1 est alors prêt à recevoir un véhicule V à entretenir et/ou réparer, comme représenté schématiquement sur la Figure **7****.**

A l'inverse, lorsque l'on souhaite déplacer l'atelier 1 mobile vers un autre site, l'atelier 1 est amené à passer de la configuration déployée à la configuration fermée par la mise en œuvre des étapes ci-dessus dans l'ordre inverse. L'atelier 1 en configuration fermée, et contenant l'unique engin de manutention 3 ainsi que l'ensemble des équipements 5, les panneaux complémentaires 10 et les moyens de mise à niveau 4, peut être transporté aisément vers le site souhaité.

L'atelier 1 selon le premier mode de réalisation ci-dessus est transportable à la manière d'un conteneur classique.

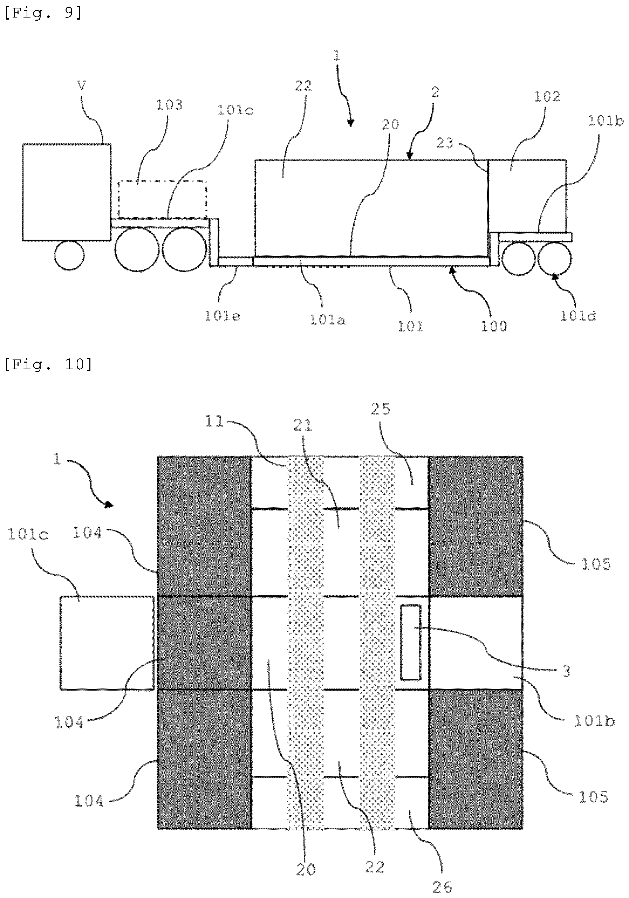

Si l'on se réfère maintenant aux Figures 9 et 10, on peut voir que l'on y a représenté l'atelier 1 selon un second mode de réalisation, qui diffère de celui décrit ci-dessus en ce qu'il ne comprend pas de berce 9 et qu'à la place il incorpore un châssis roulant 101. Ainsi, seules les parties qui diffèrent du premier mode de réalisation vont être décrites ci-après.

Dans l'exemple illustré sur les Figures 9 et 10, le châssis roulant 101 est celui d'une remorque 100, par exemple du type remorque porte-engin classique. Le châssis roulant 101 comprend en particulier une partie principale 101a, entre deux parties d'extrémité, dont une première, 101b, porte deux essieux, et une seconde, 101c, est en col de cygne pour attelage à un véhicule motorisé V, ne faisant pas partie de la remorque 100. Les essieux et la partie en col de cygne forment des moyens pour roulage 101d, en ce sens qu'ils permettent à la remorque 100 de pouvoir rouler.

La partie principale 101a est abaissée par rapport aux parties d'extrémité 101b, 101c, de façon à se trouver à proximité du sol. Le socle-plancher 20 est monté sur la partie principale 101a et y est fixé, de manière démontable ou non, par tout moyen approprié.

Le socle-plancher 2à est en particulier orienté de telle sorte que l'engin de manutention 3 se situe côté première partie d'extrémité 101b, et l'on prévoira avantageusement au moins une paroi d'extrémité 23 qui s'étendra à partir du socle-plancher 20, au voisinage de ladite première partie d'extrémité 101b.

Dans l'exemple illustré, le châssis roulant 101 est télescopique, ce qui est facultatif, et la partie principale 101a est montée coulissante sur un rail de guidage 101e, le déplacement de la partie principale 101a étant commandé par tout moyen approprié, comme cela est bien connu, comme par exemple par un système à crémaillère.

On pourra ne pas prévoir de seconde paroi d'extrémité, côté seconde partie d'extrémité 101c. Toutefois, il serait également possible de prévoir une seconde paroi d'extrémité montée à rotation, par exemple par charnière, au socle-plancher 20, de façon à pouvoir l'abaisser dans le plan du socle-plancher 20 dans la configuration déployée de l'atelier **1.** Le transport de l'atelier 1 étant ici assuré par remorquage, les éléments de coin 8 ne sont pas utiles et l'on peut donc ne pas prévoir de cadre de renfort 230, 240.

Les première et seconde parties d'extrémité 101b, 101c constituent par ailleurs des régions de support supplémentaires qui permettent d'emporter des équipements supplémentaires 102, par exemple sur la première partie d'extrémité 101b, et d'y positionner, par exemple sur la seconde partie d'extrémité 101c, les équipements 103 électriques, hydrauliques et/ou pneumatiques requis pour le déploiement et/ou l'utilisation de l'atelier **1.**

L'atelier 1 est placé dans la configuration fermée ou dans la configuration déployée de la même manière que celle décrite précédemment.

Dans la configuration fermée, illustrée sur la Figure 9, l'atelier 1 peut être transporté sur la route par un véhicule motorisé tracteur, à la manière d'une remorque classique. En d'autres termes, l'atelier selon l'invention peut être considéré comme étant une remorque roulante équipée d'un atelier de maintenance de véhicules.

Dans la configuration déployée, illustrée sur la Figure 10, le socle-plancher 20, les parois latérales 21, 22, les panneaux de toit 25, 26 et les panneaux complémentaires forment la plateforme de travail, qui peut ici être complétée de nouveau par des panneaux supplémentaires 104 amovibles placés dans l'espace créé par l'extension du châssis roulant 101, ainsi que par des panneaux supplémentaires 105 placés des deux côtés de la seconde partie d'extrémité 101b du châssis roulant 101.

On pourra bien entendu prévoir des moyens de mise à niveau, manuels ou non, pour la plateforme de travail, tels que des cales manuelles, des vérins de stabilisation, etc., par exemple portés par le châssis roulant 101.

Il est bien entendu que les modes de réalisation particuliers qui viennent d'être décrits ont été donnés à titre indicatif et non limitatif, et que des modifications peuvent être apportées sans que l'on s'écarte pour autant de la présente invention, définie par les revendications ci-jointes.

Par exemple, le châssis roulant pourrait être celui d'un véhicule motorisé, l'atelier selon l'invention pouvant alors être considéré comme étant un véhicule motorisé, notamment du type camion, équipé d'un atelier de maintenance de véhicules.

## Revendications

1. Atelier (1) de maintenance de véhicules (V) mobile comprenant un socle-plancher (20), deux parois latérales (21, 22) et un toit (25, 26), au moins l'une des parois latérales (21, 22) étant articulée par rapport au socle-plancher (20) suivant leur bord commun pour être mobile entre une position relevée, dans laquelle elle s'étend dans un plan perpendiculaire audit socle-plancher (20), et une position abaissée, dans laquelle elle s'étend dans le prolongement dudit socle-plancher (20), dans le plan dudit socle-plancher (20), de façon à constituer avec le socle-plancher (20) une plateforme, l'atelier (1) étant ainsi apte à être placé dans une configuration fermée, dans laquelle les deux parois latérales (21, 22) s'étendent dans un plan perpendiculaire audit socle-plancher (20) et le toit (25, 26) s'étend dans un plan parallèle audit socle-plancher (20), et dans une configuration déployée, dans laquelle ladite au moins une paroi latérale (21, 22) est en position abaissée, le toit (25, 26) est articulé par rapport à au moins une paroi latérale mobile (21, 22) suivant leur bord commun pour être mobile entre au moins deux positions, à savoir une position repliée, dans laquelle il s'étend dans un plan parallèle audit socle-plancher (20) dans la position relevée de ladite paroi latérale mobile (21, 22) associée, l'atelier (1) étant alors en configuration fermée, et une position dépliée, l'atelier (1) étant alors en configuration déployée, l'articulation (A3, A4) entre le toit (25, 26) et l'au moins une paroi latérale mobile (21, 22) autorisant un pivotement d'un angle supérieur à 90 degrés entre la position repliée et la position dépliée, l'atelier étant **caractérisé par le fait que** en position dépliée, le toit (25, 26) forme au moins une rampe d'accès à la plateforme dans la position abaissée de ladite paroi latérale mobile (21, 22) associée.

2. Atelier (1) selon la revendication 1, **caractérisé par le fait qu'**il comporte en outre au moins une partie d'extrémité (23, 24), s'étendant perpendiculairement à partir du socle-plancher (20), à une extrémité respective de ce dernier, ainsi qu'un unique engin de manutention (3) porté par le socle-plancher (20) et fixé au socle-plancher (20) au voisinage d'une paroi d'extrémité (23, 24), l'engin de manutention (3) étant contenu à l'intérieur du volume de l'atelier (1) en configuration fermée, l'engin de manutention (3) étant en outre configuré pour être apte à intervenir sur un véhicule (V) reçu sur la plateforme dans la configuration déployée de l'atelier (1), et l'atelier (1) et l'engin de manutention (3) étant en outre configurés pour permettre à l'engin de manutention (3) d'assurer également la mobilité de l'atelier (1) entre ladite configuration fermée et ladite configuration déployée.

3. Atelier (1) selon la revendication 2, **caractérisé par le fait que** l'engin de manutention (3) est une grue (3) repliable, un espace latéral (210) étant formé entre une paroi latérale mobile (21) et la paroi d'extrémité (23) située au voisinage de la grue (3) dans la configuration fermée de l'atelier (1) et un espace supérieur (250, 260) étant formé entre le toit (25, 26) et la paroi d'extrémité (23) située au voisinage de la grue (3) dans la configuration fermée de l'atelier (1), lesdits espaces latéral (210) et supérieur (250, 260) permettant le déploiement de la grue (3) dans la configuration fermée de l'atelier (1).

4. Atelier (1) selon la revendication 3, **caractérisé par le fait que** des panneaux complémentaires (10) amovibles ou repliables remplissent l'espace latéral (210) et l'espace supérieur (250, 260) dans la configuration déployée de l'atelier (1), de telle sorte que les bords perpendiculaires aux bords articulés sont des bords droits.

5. Atelier (1) selon l'une quelconque des revendications 1 à 4, **caractérisé par le fait qu'**il comporte deux parois d'extrémité (23, 24) montées fixes par rapport au socle-plancher (20), deux parois latérales mobiles (21, 22) articulées aux grands côtés du socle-plancher (20) et aptes chacune à adopter ladite position relevée ou ladite position abaissée, le toit (25, 26) étant défini par deux panneaux de toit (25, 26), chaque panneau de toit (25, 26) étant articulé au grand côté opposé au grand côté articulé au socle-plancher (20) de l'une des parois latérales mobiles (21, 22) et étant apte à adopter ladite position repliée ou ladite position dépliée.

6. Atelier (1) selon l'une quelconque des revendications 1 à 5, **caractérisé par le fait que**, dans la position abaissée, la ou les parois latérales mobiles (21, 22) sont portées par des moyens de mise à niveau (4) agencés entre la ou chaque paroi latérale mobile (21, 22) et le sol afin d'assurer le maintien en porte-à-faux de la ou des parois latérales (21, 22) abaissées à la même hauteur que le socle-plancher (20).

7. Atelier (1) selon l'une quelconque des revendications 1 à 6, **caractérisé par le fait que** qu'il renferme, dans la configuration fermée, au moins un équipement (5) dédié à la maintenance de véhicules (V), lequel équipement (5) est porté par le socle-plancher (20) dans la configuration fermée de l'atelier (1).

8. Atelier (1) selon l'une quelconque des revendications 1 à 7, **caractérisé par le fait qu'**il comporte un moyen de stockage de fluides usagés (6) logé dans l'épaisseur d'un panneau définissant une paroi latérale mobile (21, 22).

9. Atelier (1) selon l'une quelconque des revendications 1 à 8, **caractérisé par le fait qu'**il comporte un moyen d'alimentation en énergie (7) logé au moins en partie dans l'épaisseur d'un panneau définissant une paroi d'extrémité (23, 24).

10. Atelier (1) selon l'une quelconque des revendications 1 à 9, **caractérisé par le fait qu'**il comprend une berce (9), laquelle comprend notamment deux rails (9a) solidaires d'une face inférieure du socle-plancher (2) et faisant saillie de ce dernier à une première extrémité des rails (9a), une potence (9b) à deux bras s'étendant à partir desdites premières extrémités des rails (9a), un crochet de préhension (9c) solidaire de la potence (9b), et deux rouleaux de dépose (9d) chacun situé au voisinage d'une seconde extrémité d'un rail (9a) respectif.

11. Atelier (1) selon l'une quelconque des revendications 1 à 9, **caractérisé par le fait qu'**il comprend un châssis roulant (101) dont une partie principale (101a) est abaissée par rapport à deux parties d'extrémité (101b, 101c) portant des moyens pour roulage (101d), le socle-plancher (2) étant fixé sur ladite partie principale (101a).

## Patentansprüche

1. - Mobile Werkstatt (1) zur Wartung von Fahrzeugen (V), umfassend einen Boden-Sockel (20), zwei Seitenwände (21, 22) und ein Dach (25, 26), wobei mindestens eine der Seitenwände (21, 22) relativ zu dem Boden-Sockel (20) entlang ihrer gemeinsamen Kante gelenkig ist, um zwischen einer aufgerichteten Position, in der sie sich in einer Ebene senkrecht zu dem Boden-Sockel (20) erstreckt, und einer abgesenkten Position, in der sie sich in Verlängerung des Boden-Sockels (20) in der Ebene des Boden-Sockels (20) erstreckt, beweglich zu sein, so dass sie zusammen mit dem Boden-Sockel (20) eine Plattform bildet, wobei die Werkstatt (1) somit geeignet ist, in einer geschlossenen Konfiguration angeordnet zu sein, in der sich die beiden Seitenwände (21, 22) in einer senkrechten Ebene zu dem Boden-Sockel (20) erstrecken und sich das Dach (25, 26) in einer zu dem Boden-Sockel (20) parallelen Ebene erstreckt, und in einer entfalteten Konfiguration, in der die mindestens eine Seitenwand (21, 22) in abgesenkter Position ist, wobei das Dach (25, 26) relativ zu mindestens einer beweglichen Seitenwand (21, 22) entlang ihrer gemeinsamen Kante angelenkt ist, um zwischen mindestens zwei Positionen beweglich zu sein, nämlich einer zusammengeklappten Position, in der es sich in einer zu dem Boden-Sockel (20) parallelen Ebene in der aufgerichteten Position der zugeordneten beweglichen Seitenwand (21, 22) erstreckt, wobei die Werkstatt (1) dann in geschlossener Konfiguration ist, und einer ausgeklappten Position, wobei die Werkstatt (1) dann in entfalteter Konfiguration ist, wobei das Gelenk (A3, A4) zwischen dem Dach (25, 26) und der mindestens einen beweglichen Seitenwand (21, 22) ein Schwenken um einen Winkel von mehr als 90 Grad zwischen der zusammengeklappten und der ausgeklappten Position erlaubt, wobei die Werkstatt **dadurch gekennzeichnet ist, dass** das Dach (25, 26) in der ausgeklappten Position mindestens eine Zugangsrampe zu der Plattform in der abgesenkten Position der zugeordneten beweglichen Seitenwand (21, 22) bildet.

2. - Werkstatt (1) nach Anspruch 1, **dadurch gekennzeichnet, dass** sie Ferner mindestens einen Endbereich (23, 24) aufweist, der sich senkrecht ab dem Boden-Sockel (20) an einem jeweiligen Ende desselben erstreckt, sowie eine einzige Handhabungsmaschine (3), die von dem Boden-Sockel (20) getragen und an dem Boden-Sockel (20) in der Nähe einer Endwand (23, 24) befestigt ist, wobei die Handhabungsmaschine (3) im Inneren des Volumens der Werkstatt (1) in geschlossener Konfiguration enthalten ist, wobei die Handhabungsmaschine (3) ferner so konfiguriert ist, dass sie geeignet ist, an einem auf der Plattform in der entfalteten Konfiguration der Werkstatt (1) aufgenommenen Fahrzeug (V) arbeiten zu können, wobei die Werkstatt (1) und die Handhabungsmaschine (3) ferner so konfiguriert sind, dass sie der Handhabungsmaschine (3) ebenfalls die Sicherstellung der Mobilität der Werkstatt (1) zwischen der geschlossenen Konfiguration und der entfalteten Konfiguration erlauben.

3. - Werkstatt (1) nach Anspruch 2, **dadurch gekennzeichnet, dass** die Handhabungsmaschine (3) ein zusammenklappbarer Kran (3) ist, wobei ein seitlicher Raum (210) zwischen einer beweglichen Seitenwand (21) und der Endwand (23), die sich in der Nähe des Krans (3) in der geschlossenen Konfiguration der Werkstatt (1) befindet, gebildet wird, und ein oberer Raum (250, 260) zwischen dem Dach (25, 26) und der Endwand (23), die sich in der Nähe des Krans (3) in der geschlossenen Konfiguration der Werkstatt (1) befindet, gebildet wird, wobei der seitliche (210) und obere (250, 260) Raum das Entfalten des Krans (3) in der geschlossenen Konfiguration der Werkstatt (1) gestatten.

4. - Werkstatt (1) nach Anspruch 3, **dadurch gekennzeichnet, dass** abnehmbare oder zusammenklappbare komplementäre Platten (10) den seitlichen Raum (210) und den oberen Raum (250, 260) in der entfalteten Konfiguration der Werkstatt (1) ausfüllen, so dass die zu den Gelenkkanten senkrechten Kanten gerade Kanten sind.

5. - Werkstatt (1) nach einem der Ansprüche 1 bis 4, **dadurch gekennzeichnet, dass** sie zwei Endwände (23, 24) aufweist, die relativ zu dem Boden-Sockel (20) fest angebracht sind, zwei bewegliche Seitenwände (21, 22), die an den Längsseiten des Boden-Sockels (20) angelenkt sind und jeweils geeignet sind, die aufgerichtete oder die abgesenkte Position einnehmen zu können, wobei das Dach (25, 26) durch zwei Dachplatten (25, 26) definiert ist, wobei jede Dachplatte (25, 26) an der Längsseite angelenkt ist, die der Längsseite gegenüberliegt, die an dem Boden-Sockel (20) einer der beweglichen Seitenwände (21, 22) angelenkt ist und geeignet ist, die zusammengeklappte oder die ausgeklappte Position einzunehmen.

6. - Werkstatt (1) nach einem der Ansprüche 1 bis 5, **dadurch gekennzeichnet, dass** in der abgesenkten Position die bewegliche(n) Seitenwand(wände) (21, 22) von Nivellierungsmitteln (4) getragen werden, die zwischen der oder jeder beweglichen Seitenwand (21, 22) und dem Boden eingerichtet sind, um das freitragende Halten der abgesenkte(n) Seitenwand(wände) (21, 22) auf gleicher Höhe wie des Boden-Sockels (20) zu gewährleisten.

7. - Werkstatt (1) nach einem der Ansprüche 1 bis 6, **dadurch gekennzeichnet, dass** sie in der geschlossenen Konfiguration mindestens eine für die Wartung von Fahrzeugen (V) bestimmte Ausrüstung (5) enthält, wobei die Ausrüstung (5) in der geschlossenen Konfiguration der Werkstatt (1) von dem Boden-Sockel (20) getragen wird.

8. - Werkstatt (1) nach einem der Ansprüche 1 bis 7, **dadurch gekennzeichnet, dass** sie ein Mittel zur Lagerung von Altfluids (6) umfasst, das in der Dicke einer Platte angeordnet ist, die eine bewegliche Seitenwand (21, 22) bildet.

9. - Werkstatt (1) nach einem der Ansprüche 1 bis 8, **dadurch gekennzeichnet, dass** sie ein Mittel zur Energieversorgung (7) umfasst, das mindestens zum Teil in der Dicke einer Platte angeordnet ist, die eine Endwand (23, 24) bildet.

10. - Werkstatt (1) nach einem der Ansprüche 1 bis 9, **dadurch gekennzeichnet, dass** sie einen Wechselbehälter (9) umfasst, welcher insbesondere zwei Schienen (9a) umfasst, die mit einer Unterseite des Boden-Sockels (2) fest verbunden sind und an einem ersten Ende der Schienen (9a) aus diesem hervorstehen, einen Ausleger (9b) mit zwei Armen, die sich ab den ersten Enden der Schienen (9a) erstrecken, einen Greifhaken (9c), der mit dem Ausleger (9b) fest verbunden ist, und zwei Ablagerollen (9d), die sich jeweils in der Nähe eines zweiten Endes einer jeweiligen Schiene (9a) befinden.

11. - Werkstatt (1) nach einem der Ansprüche 1 bis 9, **dadurch gekennzeichnet, dass** sie ein rollendes Fahrgestell (101) umfasst, von dem ein Hauptteil (101a) relativ zu zwei Endteilen (101b, 101c), die Rollmittel (101d) tragen, abgesenkt ist, wobei der Boden-Sockel (2) auf dem Hauptteil (101a) befestigt ist.

## Claims

1. - A mobile maintenance workshop (1) for vehicles (V), comprising a base-floor (20), two side walls (21, 22) and a roof (25, 26), wherein at least one of the side walls (21, 22) is hinged relative to the base-floor (20) along their common edge so as to be movable between a raised position in which it extends in a plane perpendicular to said base-floor (20), and a lowered position in which it extends in line with said base-floor (20), in the plane of said base-floor (20), so as to constitute with the base-floor (20) a platform, the workshop (1) thus being able to be placed in a closed configuration, in which the two side walls (21, 22) extend in a plane perpendicular to said base-floor (20) and the roof (25, 26) extends in a plane parallel to said base-floor (20), and in a deployed configuration, in which said at least one side wall (21, 22) is in a lowered position, the roof (25, 26) is hinged relative to at least one movable side wall (21, 22) along their common edge so as to be movable between at least two positions, namely a folded position, in which it extends in a plane parallel to said base-floor (20) in the raised position of said associated movable side wall (21, 22), the workshop (1) then being in a closed configuration, and an unfolded position, the workshop (1) then being in an deployed configuration, the hinge (A3, A4) between the roof (25, 26) and the at least one movable side wall (21, 22) allowing pivoting with an angle greater than 90 degrees between the folded position and the unfolded position, the workshop being **characterized in that**, in the unfolded position, the roof (25, 26) forms at least one access ramp to the platform in the lowered position of said associated movable side wall (21, 22).

2. - The workshop (1) according to claim 1, **characterized in that** it further comprises at least one end portion (23, 24), extending perpendicularly from the base-floor (20), at a respective end of the latter, and a single handling device (3) carried by the base-floor (20) and attached to the base-floor (20) in the vicinity of an end wall (23, 24), the handling device (3) being contained within the volume of the workshop (1) in the closed configuration, the handling device (3) being further configured to be able to intervene on a vehicle (V) received on the platform in the deployed configuration of the workshop (1), and the workshop (1) and the handling device (3) being further configured to enable the handling device (3) to also ensure the mobility of the workshop (1) between said closed configuration and said deployed configuration.

3. - The workshop (1) according to claim 2, **characterized in that** the handling device (3) is a folding crane (3), wherein a lateral space (210) is formed between a movable side wall (21) and the end wall (23) located in the vicinity of the crane (3) in the closed configuration of the workshop (1) and an upper space (250, 260) is formed between the roof (25, 26) and the end wall (23) located in the vicinity of the crane (3) in the closed configuration of the workshop (1), said lateral (210) and upper (250, 260) spaces enabling the crane (3) to be deployed in the closed configuration of the workshop (1).

4. - The workshop (1) according to claim 3, **characterized in that** removable or foldable complementary panels (10) fill the lateral space (210) and the upper space (250, 260) in the deployed configuration of the workshop (1), so that the edges perpendicular to the hinged edges are straight edges.

5. - The workshop (1) according to any one of claims 1 to 4, **characterized in that** it comprises two end walls (23, 24) fixedly mounted relative to the base-floor (20), two movable side walls (21, 22) hinged to the long sides of the base-floor (20) and each able to assume said raised position or said lowered position, wherein the roof (25, 26) is defined by two roof panels (25, 26), each roof panel (25, 26) being hinged to the long side opposite the long side hinged to the base-floor (20) of one of the movable side walls (21, 22) and being able to assume said folded position or said unfolded position.

6. - The workshop (1) according to any one of claims 1 to 5, **characterized in that**, in the lowered position, the one or more movable side walls (21, 22) is carried by leveling means (4) arranged between the or each movable side wall (21, 22) and the ground in order to ensure that the one or more side walls (21, 22) lowered to the same height as the base-floor (20) are held in cantilever.

7. - The workshop (1) according to any one of claims 1 to 6, **characterized in that** it contains, in the closed configuration, at least one piece of equipment (5) dedicated to maintenance of vehicles (V), wherein said equipment (5) is carried by the base-floor (20) in the closed configuration of the workshop (1).

8. - The workshop (1) according to any one of claims 1 to 7, **characterized in that** it comprises a used fluid storage means (6) housed in the thickness of a panel defining a movable side wall (21, 22).

9. - The workshop (1) according to any one of claims 1 to 8, **characterized in that** it comprises a power supply means (7) at least partly housed in the thickness of a panel defining an end wall (23, 24).

10. - The workshop (1) according to any one of claims 1 to 9, **characterized in that** it comprises a cradle (9), which in particular comprises two rails (9a) integral with a lower face of the base-floor (2) and projecting therefrom at a first end of the rails (9a), a two-armed pillar (9b) extending from said first ends of the rails (9a), a gripping hook (9c) integral with the pillar (9b), and two depositing rollers (9d) each located in the vicinity of a second end of a respective rail (9a).

11. - The workshop (1) according to any one of claims 1 to 9, **characterized in that** it comprises a rolling frame (101), a main part (101a) of which is lowered relative to two end parts (101b, 101c) carrying rolling means (101d), the base-floor (2) being fixed to said main part (101a).
